# EUROPEAN PATENT APPLICATION

(11) **EP 4 488 296 A1**
(43) Date of publication of application: **08.01.2025**
(21) Application number: 22927610.0
(22) Date of filing: 28.02.2022
(51) Int. Cl.: C08B 15/08

(54) **POLYSACCHARIDE NANOSHEET AND METHOD FOR PRODUCING SAME**

(71) Applicant: Daicel Corporation, Osaka-shi, Osaka 530-0011 (JP); Kyoto University, Kyoto-shi, Kyoto 606-8501 (JP)
(72) Inventor: MATSUMURA, Hiroyuki, Tokyo 108-8230 (JP); KITAYAMA, Kenji, Tokyo 108-8230 (JP); NAKAMURA, Masaharu, Kyoto-shi, Kyoto 606-8501 (JP); ISOZAKI, Katsuhiro, Kyoto-shi, Kyoto 606-8501 (JP); IMAI, Makiko, Kyoto-shi, Kyoto 606-8501 (JP); SUZUKI, Shogo, Kyoto-shi, Kyoto 606-8501 (JP); OGATA, Yuki, Kyoto-shi, Kyoto 606-8501 (JP)
(74) Representative: Grünecker Patent- und Rechtsanwälte PartG mbB
(86) International application number: PCT/JP2022/008399
(87) International publication number: WO 2023/162263

(57) **Abstract**

A polysaccharide nanosheet is formed to contain a plurality of fibrous substances. A main component of the polysaccharide nanosheet is a polysaccharide. In the polysaccharide nanosheet, a plurality of fibrous substances are oriented in a planar direction in a randomly selected region on a surface of the polysaccharide nanosheet. A composition and a molded article contain the polysaccharide nanosheet. A method for producing the polysaccharide nanosheet includes subjecting a woody biomass as a raw material to a delignification treatment with an oxidant and an acid catalyst in a solvent to prepare a liquid product containing the polysaccharide nanosheet having a thickness of 500 nm or less and an aspect ratio of 10 or more.

## Description

### Technical Field

The present disclosure relates to a nanosheet. In particular, the present disclosure relates to a nanosheet made of a polysaccharide, and a method for producing the nanosheet.

### Background Art

A nanosheet is a two-dimensional nanostructure having a thickness in the order of nanometers. Known examples of nanosheets include nanosheets made of an inorganic substance such as graphene or a metal oxide. The nanosheet, which is a two-dimensional structure, exhibits specific physical properties different from those of known bulk materials, and thus attracts attention in various technical fields.

Known methods for synthesizing a nanosheet include a method of producing a monomolecular film or a laminated film by organization or polymerization of molecules at a gas-liquid interface as in the case of a Langmuir-Blodgett film, a solution-phase synthesis method, and a chemical vapor deposition method (CVD). Each of these methods involves producing a nanosheet by chemical synthesis.

For example, Patent Document 1 discloses a spin coating method as a general method for producing a nanosheet layer made of a polymer. Polysaccharides such as cellulose are exemplified as the polymer.

Meanwhile, cellulose nanofibers and cellulose derivative nanofibers have been proposed as nanomaterials mainly composed of polysaccharides such as cellulose. Nanofiber is a one-dimensional nanostructure defined as a fibrous substance having a diameter of from 1 to 100 nm and a length of 100 or more times the diameter. Cellulose nanofibers have properties such as high strength, low thermal expansion, transparency, high specific surface area, biodegradability, and biocompatibility, and have a small environmental load as a plant-derived material. Therefore, much research and development have been conducted on cellulose nanofibers.

For example, Patent Document 2 discloses fine fibrous cellulose having a maximum fiber width of 1000 nm or less, the fine fibrous cellulose being produced by pulverizing wood chips into wood powder and subjecting the wood powder to degreasing treatment, delignification treatment, hemicellulose removal treatment, and micronization treatment. Patent Document 3 discloses a technique in which a lignin-polysaccharide complex is reacted with a peroxide and/or a peracid in water and/or an organic solvent to prepare a liquid product, and the polysaccharide contained in the liquid product is subjected to a defibration treatment to produce a cellulose nanofiber.

Non-Patent Literatures 1 to 4 disclose cellulose nanoplatelets (CNPs) obtained from parenchymatous cells of leaves of Agave salmiana. Non-Patent Literature 5 discloses cellulose nanoplatelets obtained from Banana Pseudostem. For example, according to the abstract of Non-Patent Literature 1, the CNPs have a thickness of 90 nm or 70 nm and a large aspect ratio with a lateral size of several µm to several hundred µm.

### Citation List

### Patent Document

Patent Document 1: WO 2016/140334
Patent Document 2: WO 2011/129241
Patent Document 3: WO 2021/125362

### Non-Patent Literature

Non-Patent Literature 1: L. Chavez-Guerreroa et al., Cellulose, 2017, 24, 3741-3752.
Non-Patent Literature 2: L. Chavez-Guerreroa et al., Carbohydrate Polymers, 2018, 181, 642-649.
Non-Patent Literature 3: L. Chavez-Guerreroa et al., Carbohydrate Polymers, 2019, 210, 85-91.
Non-Patent Literature 4: L. Chavez-Guerreroa et al., Carbohydrate Polymers, 2021, 254, 117463.
Non-Patent Literature 5: G. Flores-Jeronimo et al., Waste and Biomass Valorization, 2021, 12, 5715-5723.

### Summary of Invention

### Technical Problem

The techniques disclosed in Patent Literatures 2 and 3 are techniques for producing cellulose nanofibers by decomposing and removing lignin from wood powder as a raw material and then performing a defibration treatment or a micronization treatment. For example, according to Isogai, Journal of Wood Science, 59,449 (2013), cellulose nanofiber is a fibrous substance up to several 10 nm wide and 3 mm long. Cellulose nanofiber is also referred to as microfibrillated cellulose or cellulose nanofibril.

Cellulose nanofiber is a one-dimensional structure and has anisotropy in which it has high strength in the axial direction but has low strength against stress in a direction orthogonal to the axial direction. In the case of melt film formation or solution film formation using cellulose nanofiber having a one-dimensional structure, many fibers are oriented in the shear stress direction. Consequently, anisotropy occurs also in the strength of the resulting sheet. Furthermore, there is a problem that cellulose nanofiber tends to aggregate when purified from a water-soluble solvent.

The sheet-shaped substances such as the cellulose nanoplatelets disclosed in Non-Patent Literatures 1 to 5 are two-dimensional structures, and have no anisotropy in strength in a uniaxial direction as compared with cellulose nanofiber. Thus, a homogeneous composite material may be produced. However, since fibers are not oriented in the planar direction, there is a problem that a desired strength cannot be achieved. That is, in each of the CNPs disclosed in Non-Patent Literatures 1 to 5, cellulose nanofibers are randomly arranged due to a naturally derived structure of a raw material plant. Specifically, since the raw material plant does not have a fiber-oriented structure, the sheet-shaped substance obtained from the raw material plant naturally does not exhibit the properties due to the fiber-oriented structure.

The technique disclosed in Patent Document 1 is a production method based on the premise that a polysaccharide such as cellulose is dissolved. Therefore, the cellulose I crystal structure itself disappears in the first place, and thus there is a problem that it is difficult to achieve the effect of improving the strength.

There has not yet been proposed a nanosheet having a fiber-oriented structure derived from the tissue of a woody biomass and containing, as a raw material, a plant with advanced lignification (lignin accumulation) such as wood abundantly present as a resource, or a method for producing the nanosheet. In particular, there has not been proposed a polysaccharide nanosheet containing a polysaccharide as a material, retaining a tough cellulose I crystal structure and having a fibrous substance oriented in the plane of the nanosheet. An object of the present disclosure is to provide a polysaccharide nanosheet having a high degree of fiber orientation produced from a woody biomass as a raw material, and a method for producing the polysaccharide nanosheet.

### Solution to Problem

A polysaccharide nanosheet according to an embodiment of the present disclosure is formed to contain a plurality of fibrous substances. In the polysaccharide nanosheet, the fibrous substances are oriented in a planar direction in a randomly selected region on a surface of the polysaccharide nanosheet. The nanosheet contains a polysaccharide as a main component.

The polysaccharide nanosheet may have a region in which a degree of orientation of the fibrous substances as measured by a method described below is 1.3 or more:
a method of measuring the degree of orientation: a 1 µm square region in a microscopic image of a surface of the polysaccharide nanosheet is binarized and then subjected to Fourier transform to obtain a power spectrum image; an approximate ellipse is obtained from the power spectrum image by a least-squares method; and a ratio a/b of a major axis a to a minor axis b of the approximate ellipse is calculated and defined as the degree of orientation.

The polysaccharide nanosheet may have a region in which a degree of orientation of the fibrous substances as measured by a method described below is 1.3 or more:
a method of measuring the degree of orientation: a 5 µm square region in a microscopic image of a surface of the polysaccharide nanosheet is binarized and then subjected to Fourier transform to obtain a power spectrum image; an approximate ellipse is obtained from the power spectrum image by a least-squares method; and a ratio a/b of a major axis a to a minor axis b of the approximate ellipse is calculated and defined as the degree of orientation.

The polysaccharide nanosheet may have a region in which a degree of orientation of the fibrous substances as measured by a method described below is 1.3 or more:
a method of measuring the degree of orientation: a 23.7 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

In the polysaccharide nanosheet, an average value obtained by measuring degrees of orientation of the fibrous substances in a plurality of randomly selected regions on a surface of the polysaccharide nanosheet by a measurement method described below may be 1.3 or more:
a method of measuring the degree of orientation: a 1 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

In the polysaccharide nanosheet, when degrees of orientation of the fibrous substances are measured in a plurality of randomly selected regions on a surface of the polysaccharide nanosheet by a measurement method described below, a degree of orientation may be 1.3 or more in 40% or more of a total number of measured regions:
a method of measuring the degree of orientation: a 1 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

The polysaccharide nanosheet may have a thickness of 500 nm or less. The nanosheet may have an aspect ratio of 10 or more, the aspect ratio being represented as a ratio of a diameter of a maximum inscribed circle obtained by projection on a plane perpendicular to a thickness direction to the thickness of the nanosheet.

The polysaccharide may be a polysaccharide derived from a woody biomass. The polysaccharide may have a weight average molecular weight of 150000 or more and 1500000 or less.

In the polysaccharide nanosheet, the polysaccharide may contain cellulose.

A composition according to an embodiment of the present disclosure contains any of the polysaccharide nanosheets described above. A molded article according to an embodiment of the present disclosure contains any of the polysaccharide nanosheets described above.

A method for producing a polysaccharide nanosheet according to an embodiment of the present disclosure includes subjecting a woody biomass as a raw material to a delignification treatment with an oxidant and an acid catalyst in a solvent, to prepare a liquid product containing a polysaccharide nanosheet having a thickness of 500 nm or less and an aspect ratio of 10 or more, the aspect ratio being represented as a ratio of a diameter of a maximum inscribed circle obtained by projection on a plane perpendicular to a thickness direction to the thickness of the polysaccharide nanosheet. The woody biomass may be a woody biomass having a secondary wall.

The production method may further include separating a solid content from the liquid product.

The production method may further include a stirring treatment during the delignification treatment. The production method may further include a stirring treatment after the delignification treatment. The production method may include a stirring treatment during and after the delignification treatment.

The production method may further include separating the polysaccharide nanosheet from a supernatant obtained by separation of the solid content through centrifugation of the liquid product.

### Advantageous Effects of Invention

The polysaccharide nanosheet according to an embodiment of the present disclosure has a fiber-oriented structure derived from a plant tissue as a raw material. The polysaccharide nanosheet is expected to have excellent properties such as high strength and high barrier properties due to its shape and oriented structure. Further, the polysaccharide nanosheet can be easily produced under mild conditions and with a small number of steps by using a woody biomass having a low environmental load as a raw material.

### Brief Description of Drawings

FIG. 1 is a laser microscopic image of a polysaccharide nanosheet according to an embodiment of the present disclosure.
FIG. 2 is a diagram for describing a method of measuring a degree of orientation, and is an example of a Fourier transform power spectrum obtained by processing a microscopic image of a polysaccharide nanosheet.
FIG. 3 is a diagram for describing a method of measuring a degree of orientation, and is an example in which a Fourier transform power spectrum is subjected to polar coordinate transformation.
FIG. 4 is a scanning electron microscopic image illustrating a state where a nanosheet is peeled off from a fiber bundle in a production process of Example 1.
FIG. 5 is a scanning electron microscopic image after a micronization treatment in Example 1.
FIG. 6A is an atomic force microscopic image in Example 1.
FIG. 6B illustrates a height profile from A to D in FIG. 6A.
FIG. 7 is a scanning electron microscopic image in Example 2.
FIG. 8 is a scanning electron microscopic image in Comparative Example 1.
FIG. 9 is a scanning electron microscopic image in Example 3.
FIG. 10 is a photograph for illustrating transparency in Example 4.
FIG. 11 is a scanning electron microscopic image before the micronization treatment in Example 1.
FIG. 12 is an explanatory view for illustrating a structure of wood.

### Description of Embodiments

Hereinafter, an example of a preferred embodiment will be specifically described. Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiments and is limited only by the claims. Each aspect disclosed in the present specification can be combined with any other feature disclosed herein.

In the present specification, "from X to Y" indicating a range means "X or more and Y or less". Unless otherwise noted, all test temperatures are room temperature (20°C ± 5°C).

### Woody Biomass

The woody biomass mainly includes forest land remnants such as branches and leaves generated at the time of cutting trees or making wood, barks and sawdust generated from sawmills and the like, as well as demolition materials of houses and pruned branches of street trees. A preferred woody biomass is wood in the present disclosure. Leaves and the like can also be used as the woody biomass as long as the fibrous substance is oriented.

Typical woody biomass often contains lignin. However, in a production process for the polysaccharide nanosheet according to an embodiment of the present disclosure, a part or all of lignin in the woody biomass is removed.

In the woody biomass, a site treated as wood of a tree is mainly a secondary xylem inside a cambium, and bark or the like outside the cambium is rarely treated as a material. The secondary xylem is composed almost only of cell walls, and the cell walls are divided into primary walls and secondary walls. Main components of the secondary wall are cellulose, hemicellulose, and lignin, and the primary wall further contains proteins and pectin. In the woody biomass, leaf tissue is generally composed of epidermal tissue, palisade tissue, spongy tissue, and vascular bundles, and many of them do not have secondary walls. In the present disclosure, a woody biomass having secondary walls can be suitably used. Leaves having secondary walls can be used.

### Polysaccharide Nanosheet

The main component of the polysaccharide nanosheet according to an embodiment of the present disclosure is a polysaccharide. As described below, the polysaccharide nanosheet is produced by using a woody biomass as a raw material. Therefore, the main component of the nanosheet may be a polysaccharide derived from the woody biomass as a raw material or a polysaccharide derived from wood. The woody biomass will be described in detail below.

The polysaccharide nanosheet according to an embodiment of the present disclosure is formed to contain a plurality of fibrous substances. The main component of the fibrous substance may be a polysaccharide derived from a woody biomass. In the present disclosure, the fibrous substance means a substance having a shape in which the length is 100 times or more the width or the diameter. In one embodiment, the width or diameter of the fibrous substance may be from 3 to 100 nm, from 4 to 50 nm, or from 4 to 20 nm.

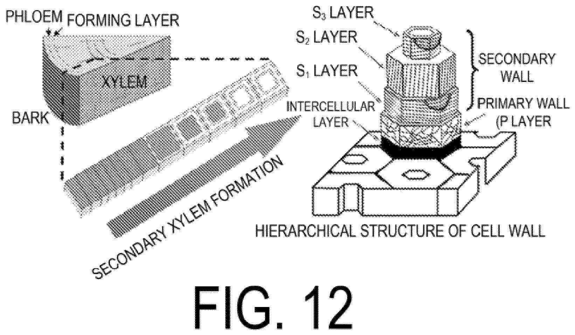

For example, wood has a hierarchical structure as illustrated in FIG. 12, and has a secondary wall composed of an S1 layer, an S2 layer, and an S3 layer as shown by oblique lines in FIG. 12. In the secondary wall, particularly in the S2 layer, fibrous substances containing cellulose as a main component (cellulose microfibrils or bundles of cellulose microfibrils) are present in a highly oriented state. A portion in which the fibrous substances are highly oriented due to such a natural structure is the main source of the polysaccharide sheet according to an embodiment of the present disclosure. The cellulose microfibrils or bundles thereof forming these layers correspond to the "fibrous substance" of the present disclosure. That is, the fibrous substance according to an embodiment of the present disclosure is a fibrous substance composed of cellulose produced in the course of tree growth, and may be a fibrous substance containing hemicellulose, lignin, or the like.

A woody biomass (wood) has a portion in which cellulose microfibrils or bundles thereof are highly oriented as in the secondary wall described above. Therefore, the polysaccharide nanosheet according to an embodiment of the present disclosure produced by using a woody biomass as a raw material can have a structure in which fibrous substances are highly oriented due to these natural tissue structures. As long as the effects of the present disclosure are obtained, the polysaccharide nanosheet may contain a portion having a low degree of orientation of the fibrous substance derived from the primary wall (P layer).

In the polysaccharide nanosheet according to an embodiment of the present disclosure, a plurality of fibrous substances are oriented in a planar direction in a randomly selected region on a surface of the polysaccharide nanosheet. The polysaccharide nanosheet according to an embodiment of the present disclosure is not limited to a polysaccharide nanosheet in which a plurality of fibrous substances are oriented in one direction on the entire surface thereof, and a polysaccharide nanosheet having a plurality of regions with different orientation directions is also included in the polysaccharide nanosheet of the present disclosure. That is, as long as the polysaccharide nanosheet has a region in which a plurality of fibrous substances are oriented in the planar direction on the surface thereof, the orientation directions in the respective regions may be different from one another. Furthermore, as long as the effects of the present disclosure are obtained, the polysaccharide nanosheet may partially have a random region in which the fibrous substance is not oriented.

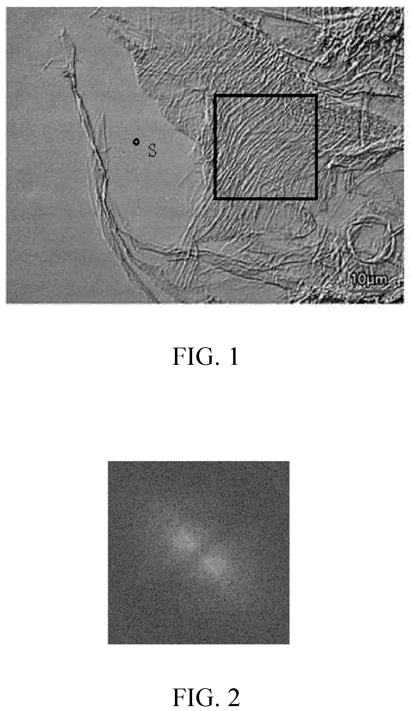

FIG. 1 is a differential interference diagram of a polysaccharide nanosheet according to an embodiment of the present disclosure, as obtained by observation with a laser microscope equipped with a white light interferometer. In FIG. 1, a 23.7 µm square region is boxed.

As illustrated in the figure, the nanosheet contains a region in which a plurality of fibrous substances are oriented in a planar direction. As used herein, the phrase "oriented in a planar direction" means that a plurality of fibrous substances or bundles thereof are arranged in a substantially uniform direction along the surface of the nanosheet in plan view of the nanosheet. Specifically, it means that the longitudinal directions of a plurality of fibrous substances are in substantially the same direction in the plane.

In other words, the polysaccharide nanosheet according to an embodiment of the present disclosure has, on its surface, a region in which a plurality of fibrous substances are oriented in a planar direction. As described above, a nanosheet having a structure in which a plurality of fibrous substances are highly oriented has not yet been known. This highly oriented structure is derived from a fiber structure of the plant tissue as a raw material. According to the polysaccharide nanosheet, the effect of the natural fiber structure which has been lost in the known production process can be obtained. The polysaccharide nanosheet according to an embodiment of the present disclosure can have excellent properties such as high strength and high barrier properties due to its shape and oriented structure.

Furthermore, a cellulose I structure, which is a crystal structure of cellulose derived from a woody biomass as a raw material, may be retained inside the polysaccharide nanosheet. The polysaccharide nanosheet may have a structure in which the fibrous substance is oriented along a plane parallel to the surface of the polysaccharide nanosheet therein.

The polysaccharide nanosheet according to an embodiment of the present disclosure may have a region in which a plurality of fibrous substances are oriented in a planar direction, and the orientation in which the fibrous substances are arranged in the region is not particularly limited. For example, in FIG. 1, the orientation in which a plurality of fibrous substances are arranged may be a vertical direction on the paper surface, a horizontal direction on the paper surface, or an oblique direction on the paper surface. Further, as long as the effects of the present disclosure are obtained, the orientations in which a plurality of fibrous substances are arranged may be different in different regions of one nanosheet. In this respect, the polysaccharide nanosheet according to an embodiment of the present disclosure is different from cellulose nanofibers oriented in a specific one-dimensional direction.

The polysaccharide sheet according to an embodiment of the present disclosure may also contain a plurality of layers formed from a plurality of fibrous substances. In this polysaccharide sheet, a plurality of fibrous substances are oriented in a planar direction in a randomly selected region of the respective layers. As long as the effects of the present disclosure are obtained, the orientations in which the fibrous substances are arranged may be different in the respective layers of one nanosheet.

The polysaccharide that is the main component of the polysaccharide nanosheet according to an embodiment of the present disclosure may be a polysaccharide derived from a woody biomass. The structure of the secondary xylem described above varies depending on tree species. The P layer classified as the primary wall has low orientation. Therefore, the polysaccharide nanosheet according to an embodiment of the present disclosure may partially contain a non-oriented portion. In addition, the in-plane orientation direction may differ depending on the S1 layer, the S2 layer, and the S3 layer from which it is derived. That is, a plurality of fibrous substances are not oriented in all portions of the polysaccharide nanosheet according to an embodiment of the present disclosure, and are not oriented in a uniform direction in all regions.

Further, the polysaccharide nanosheet according to an embodiment of the present disclosure is produced as an aggregate of a plurality of polysaccharide nanosheets. The nanosheets may include a nanosheet containing, as a main component, a polysaccharide derived from the P layer as the primary wall. Therefore, all the aggregates of the nanosheets constituting the polysaccharide nanosheet according to an embodiment of the present disclosure may not have a region in which the fibrous substance is oriented in a planar direction. From the viewpoint that the effects of the present disclosure are easily obtained, the polysaccharide nanosheet preferably includes a nanosheet in which the fibrous substance is highly oriented in a planar direction, and preferably includes, in a high proportion, a nanosheet in which the fibrous substance is oriented in a planar direction.

Preferably, the polysaccharide nanosheet has a region in which the degree of orientation of a plurality of fibrous substances is 1.3 or more. The polysaccharide nanosheet having a region in which the degree of orientation is 1.3 or more can provide excellent mechanical properties. In the present specification, the orientation of the polysaccharide nanosheet is measured by the following method in accordance with the measurement method described in JP 2012-2547 A.

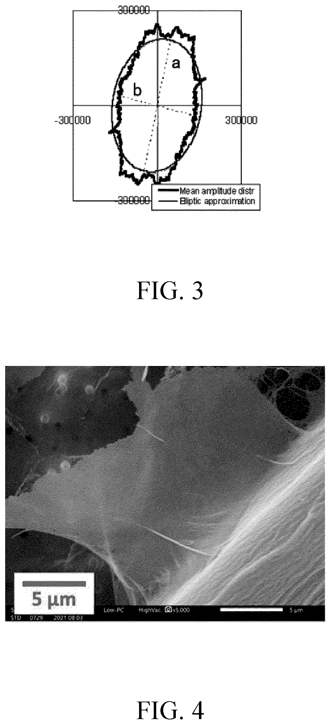

Firstly, a surface image of a randomly selected region of the polysaccharide nanosheet is taken by using a laser microscope equipped with a white light interferometer. This surface image is binarized with analysis software (http://www.enomae.com/FiberOri/index.htm) and then subjected to Fourier transformation to obtain a power spectrum image. For example, a power spectrum image of the region boxed in FIG. 1 is illustrated in FIG. 2. Next, the power spectrum image is subjected to polar coordinate transformation, and an approximate ellipse is obtained from an average of amplitude spectra by the least-squares method. FIG. 3 is a conceptual diagram for describing the approximate ellipse obtained after the polar coordinate transformation. In FIG. 3, reference character a denotes a major axis of the approximate ellipse, and reference character b denotes a minor axis of the approximate ellipse. The degree of orientation (degree of in-plane orientation) in a predetermined region is determined by calculating the ratio a/b of the major axis a to the minor axis b of the approximate ellipse. Theoretically, a minimum value of the degree of orientation is 1.0, which indicates a completely random state without in-plane anisotropy. Meanwhile, a higher degree of orientation exceeding 1.0 indicates that in-plane anisotropy is larger, and a highly oriented structure is formed.

In the polysaccharide nanosheet according to an embodiment of the present disclosure, the degree of orientation in a 1 µm square region may be 1.3 or more in a microscopic image of a randomly selected surface. When a plurality of 1 µm square regions are subjected to the measurement, the degree of orientation in at least one region has only to be 1.3 or more.

In addition, in the polysaccharide nanosheet according to another embodiment, the degree of orientation in at least one 5 µm square region may be 1.3 or more in a microscopic image of a randomly selected surface. Determination of the degree of orientation in a 5 µm square region means measurement of the degree of orientation averaged over a wider region. Therefore, the polysaccharide nanosheet according to this embodiment has a uniform degree of orientation in a wider region.

In addition, in the polysaccharide nanosheet according to still another embodiment, the degree of orientation in at least one 23.7 µm square region may be 1.3 or more in a microscopic image of a randomly selected surface. Determination of the degree of orientation in a 23.7 µm square region means measurement of the degree of orientation averaged over a much wider region. Therefore, the polysaccharide nanosheet according to this embodiment has a high degree of orientation in a much wider region.

In other words, in the polysaccharide nanosheet according to one embodiment of the present disclosure, the degree of orientation determined by measuring a microscopic image of a 1 µm square region on its surface may be 1.3 or more, the degree of orientation determined by measuring a microscopic image of a 5 µm square region on its surface may be 1.3 or more, and the degree of orientation determined by measuring a microscopic image of a 23.7 µm square region on its surface may be 1.3 or more. In the polysaccharide nanosheet in which the degree of orientation measured in a wider region is 1.3 or more, it means that the fibrous substance is oriented in a planar direction in a wider range. In this polysaccharide nanosheet, the effect of the fiber-oriented structure is remarkably exhibited.

In the polysaccharide nanosheet according to an embodiment of the present disclosure, when a plurality of randomly selected regions on the surface thereof are subjected to the measurement, the degree of orientation in at least one region may be 1.3 or more. The polysaccharide nanosheet preferably has an average value of 1.3 or more determined by measuring the degree of orientation of the fibrous substances in a plurality of randomly selected 1 µm square regions on the surface thereof. That is, even when a region having a low degree of orientation is present among the measurement regions randomly extracted from the polysaccharide nanosheet according to an embodiment of the present disclosure, the degree of orientation as an average for the whole may be 1.3 or more. The average value is determined for one polysaccharide nanosheet.

In the polysaccharide nanosheet according to an embodiment of the present disclosure, when the degrees of orientation in a plurality of randomly extracted regions are determined for one polysaccharide nanosheet, preferably, a large number of regions in which the degree of orientation of the fibrous substance is high are included in the selected regions. That is, when the degree of orientation of the fibrous substance is measured in a plurality of randomly selected 1 µm square regions on the surface of one polysaccharide nanosheet, the degree of orientation may be 1.3 or more in 40% or more of a total number of measured regions. From the viewpoint of improving strength, the regions having a degree of orientation of 1.3 or more may account for 50% or more, 70% or more, or 90% or more, and ideally account for 100% of the total number of measured regions.

From the viewpoint that the effect of the oriented structure is easily obtained, in each of the embodiments described above, the degree of orientation of the fibrous substance in each region may be 1.4 or more, 1.5 or more, or 1.6 or more. The upper limit of the degree of orientation is not particularly limited, but may be 2.5 or less, 2.2 or less, or 2.0 or less due to the limitation on the raw material of the polysaccharide nanosheet.

The thickness of the polysaccharide nanosheet is not particularly limited, and may be, for example, 10 nm or more, 15 nm or more, or 20 nm or more from the viewpoint of ease of production. From the viewpoint that properties as a two-dimensional nanostructure are easily obtained, the thickness may be 250 nm or less, 200 nm or less, or 150 nm or less.

The thickness of the polysaccharide nanosheet can be determined by analysis of an image obtained by observation with a laser microscope equipped with a white light interferometer. Specifically, in the 23.7 µm square region illustrated in FIG. 1, the average value of heights from a reference point (substrate) is determined and used as the thickness of the polysaccharide nanosheet. In FIG. 1, this reference point is indicated as S.

The size of the plane perpendicular to the thickness direction of the polysaccharide nanosheet may be 2 µm square or more, 5 µm square or more, 10 µm square or more, 20 µm square or more, or 23.7 µm square or more, from the viewpoint that the function of the polysaccharide nanosheet is easily exhibited. For example, when the polysaccharide nanosheet is blended as a reinforcing agent in a molded article, the larger the surface perpendicular to the thickness direction of the polysaccharide nanosheet, the higher the reinforcing effect. When the polysaccharide nanosheet is used as an additive, the size of the polysaccharide nanosheet may be 50 µm or less, 40 µm square or less, or 30 µm or less, from the viewpoint that high dispersibility is achieved.

The aspect ratio of the polysaccharide nanosheet is represented as the ratio of the diameter of a maximum inscribed circle obtained by projection on a plane perpendicular to the thickness direction to the thickness of the polysaccharide nanosheet. From the viewpoint that the properties as a two-dimensional nanostructure are easily obtained, the aspect ratio of the polysaccharide nanosheet may be 10 or more, 15 or more, or 20 or more. From the viewpoint of ease of production, the aspect ratio may be 1000 or less, 2000 or less, or 3000 or less. The aspect ratio of the polysaccharide nanosheet can be determined by analysis of an image obtained by observation with a laser microscope equipped with a white light interferometer.

As described above, the main component of the polysaccharide nanosheet according to an embodiment of the present disclosure is a polysaccharide, and may be a polysaccharide derived from a woody biomass as a raw material. As used herein, the term "polysaccharide" is defined as a substance in which a large number of monosaccharide molecules are polymerized by glycosidic bonds. The polysaccharide or the monosaccharide also includes a derivative thereof, for example, an acidic sugar such as uronic acid. The term "main component" means that the content of the polysaccharide is 50 mass% or more relative to the entire polysaccharide nanosheet. From the viewpoint that biodegradability is easily achieved, the content of the polysaccharide may be 70 mass% or more, 80 mass% or more, or 90 mass% or more, and the upper limit thereof is 100 mass%. In the present specification, the polysaccharide content is determined by measuring the amount of monosaccharides constituting the polysaccharide through hydrolysis with sulfuric acid described below and high-performance liquid chromatography (HPLC) of the hydrolysate. The amount of a saccharide derivative such as uronic acid can be measured separately by a known method.

The woody biomass is an excellent material in that it has a small environmental load and does not compete with food. In the present disclosure, the woody biomass is preferably wood, for example, hardwood such as eucalyptus, or softwood such as cedar. As long as the effects of the present disclosure are obtained, the woody biomass may contain a polysaccharide derived from a herbaceous plant such as bamboo, rice straw, or wheat bran. When the woody biomass contains a herbaceous plant-derived polysaccharide, it must have a fiber-oriented structure.

The main component of the woody biomass is lignocellulose. Lignocellulose is a mixture of natural polymers containing mainly cellulose, hemicellulose, and lignin. However, in the polysaccharide nanosheet according to an embodiment of the present disclosure, a part or all of the lignin is removed during the production process. Thus, typical polysaccharides derived from the woody biomass are cellulose and hemicellulose. In the present disclosure, the main component of the polysaccharide nanosheet may be cellulose.

When the polysaccharide contains cellulose, the content of cellulose relative to the entire polysaccharide is not particularly limited, but may be 50 mass% or more, 65 mass% or more, or 70 mass% or more, from the viewpoint that high orientation is easily achieved. The upper limit of the content of cellulose is not particularly limited. However, when the content of cellulose is 90 mass% or less, fiber bundles are easily micronized in the production process described below, and the productivity of the polysaccharide nanosheet tends to be improved.

### Constituent Sugar Composition of Polysaccharide

The constituent sugar composition of the polysaccharide is also not particularly limited. For example, in the constituent sugar analysis of the polysaccharide, a glucose content may be 50 mass% or more, 60 mass% or more, or 80 mass% or more relative to all the constituent sugar components. The upper limit of the glucose content is 100 mass%, and may be 90 mass% or less or less than 85%. When the glucose content is less than 85 mass%, the fiber bundle is easily micronized in the production process described below, and the productivity of the polysaccharide nanosheet tends to be improved.

In the constituent sugar analysis of the polysaccharide, a mannose content may be 2.0 mass% or more, 3.0 mass% or more, 5.0 mass% or more, 6.0 mass% or more, or 7.0 mass% or more relative to all the constituent sugar components. The mannose content may be 15 mass% or less, 12 mass% or less, or 10 mass% or less.

In the constituent sugar analysis of the polysaccharide, a xylose content may be 0.5 mass% or more, 1.0 mass% or more, 2.0 mass% or more, 3.0 mass% or more, or 4.0 mass% or more relative to all the constituent sugar components. The xylose content may be 20 mass% or less, 10 mass% or less, or 7.0 mass% or less.

The constituent sugar analysis of the polysaccharide can be performed by a high-performance liquid chromatography (HPLC) method. Specifically, about 0.2 g of a sample is precisely weighed, and 3.0 ml of sulfuric acid having a concentration of 72 mass% is added thereto for decomposition of the sample at 30°C, and then 84 ml of pure water is further added, followed by thermal decomposition with an autoclave at 120°C. The decomposed liquid obtained through the thermal decomposition is separated by filtration, and the resultant filtrate is combined with a residual washing liquid to prepare 100 ml of a test liquid. The content and proportion of each of the constituent sugar components are calculated from data obtained by HPLC measurement of the test liquid. HPLC measurement conditions are as follows.
Apparatus: Agilent 1100 HPLC System (available from Agilent Technologies)
Column: Aminex HPX-87P (300 × 7.8 mm) (available from Bio-Rad Laboratories)
Guard column: Micro-Guard Carbo-P Refill Cartridges (30 × 4.6 mm) (available from Bio-Rad Laboratories)
Column temperature: 80°C
Mobile phase: water
Mobile phase flow rate: 0.6 mL/min
Detector: RI detector

### Lignin Content

A solid content residue obtained after sulfuric acid hydrolysis of a sample collected from the polysaccharide nanosheet is dried and weighed, and the resultant value is used as a lignin content in the present specification. The lignin content of the polysaccharide nanosheet is not particularly limited as long as the effects of the present disclosure are obtained. For example, the lignin content may be 5.0 mass% or less, 4.0 mass% or less, or 3.0 mass% or less. The lower limit of the lignin content may be 0 mass%, but may be 2.0 mass% or more from the viewpoint of ease of production.

### Molecular Weight and Molecular Weight Distribution

From the viewpoint that excellent mechanical properties are achieved, the weight average molecular weight Mw of the polysaccharide may be 150000 or more, 300000 or more, or 500000 or more. The weight average molecular weight Mw of the polysaccharide may be 1500000 or less, 1200000 or less, 1000000 or less, or 900000 or less from the viewpoint of ease of production.

From the viewpoint that excellent mechanical properties are achieved, the number average molecular weight Mn of the polysaccharide may be 10000 or more, 20000 or more, or 30000 or more. From the viewpoint of ease of production, the number average molecular weight Mn of the polysaccharide may be 200000 or less, 100000 or less, or 50000 or less.

The molecular weight distribution Mw/Mn of the polysaccharide is not particularly limited as long as the effects of the present disclosure are achieved. For example, from the viewpoint of improving biodegradability, the Mw/Mn may be 2.0 or more, 3.0 or more, 5.0 or more, or 10 or more. From the viewpoint that a desired shape is easily achieved, the Mw/Mn may be 50 or less, 40 or less, or 30 or less.

The molecular weight and molecular weight distribution of the polysaccharide can be determined by gel permeation chromatography (GPC) measurement. Specifically, a sample is dissolved in N,N-dimethylacetamide containing lithium chloride, and the solution is filtered through a PTFE cartridge filter and then subjected to GPC measurement under the following conditions.
Apparatus: LC-4000 (available from JASCO)
Column: one column of KD-G 4A (4.6 mm I. D. × 1.0 cm, available from Shodex)
Guard column: one column of KD-806M (8.0 mm I. D. × 30 cm, available from Shodex)
Detector: RI detector, polarity (+)
Eluent: N,N-dimethylacetamide-based solution
Calibration curve: linear approximate straight line using standard pullulan available from Shodex

### Cellulose I Crystal Structure

It can be confirmed by X-ray diffractometry that the polysaccharide nanosheet has a cellulose I crystal structure. The measurement may be performed using a sample prepared by freeze-drying the polysaccharide nanosheet. An X-ray diffractometer MAXima_X XRD-7000 available from Shimadzu Corporation can be used as a measuring apparatus. Powder X-ray diffractometry may be performed on a press-molded sample. Cellulose I crystals having a parallel-chain structure are known to exhibit a diffraction peak in the vicinity of 2θ = 22.5° in X-ray diffraction and to exhibit high-intensity diffraction in the vicinity of 2θ = 16.7° and 14.8° by peak separation. Therefore, it can be determined that the polysaccharide nanosheet has a cellulose I crystal structure by confirming that there is high-intensity diffraction in the above-described portions of the X-ray diffraction pattern obtained for the above-described sample.

### Method for Producing Polysaccharide Nanosheet

The method for producing a polysaccharide nanosheet according to an embodiment of the present disclosure includes subjecting a woody biomass as a raw material to a delignification treatment with an oxidant and an acid catalyst in a solvent, to prepare a liquid product containing a polysaccharide nanosheet having a thickness of 500 nm or less and an aspect ratio of 10 or more, the aspect ratio being represented as a ratio of a diameter of a maximum inscribed circle obtained by projection on a plane perpendicular to a thickness direction to the thickness of the polysaccharide nanosheet. Preferably, the production method includes subjecting a woody biomass as a raw material to a delignification treatment with appropriate amounts of an oxidant and an acid catalyst in a solvent for an appropriate time and under an appropriate shear force, to prepare a liquid product containing the polysaccharide nanosheet. The production method according to an embodiment of the present disclosure can provide a polysaccharide nanosheet having a plurality of fibrous substances oriented in a planar direction in a randomly selected region on the surface thereof without performing an intentional orientation treatment. As used herein, the term "liquid product" means a substance having fluidity at room temperature (20°C ± 5°C) and normal pressure, and may be a suspension containing a solid content.

Preferably, the woody biomass may be a woody biomass having a secondary wall. The main component of the woody biomass forms a strong higher-order structure in which cellulose, hemicellulose, and lignin are intricately intertwined. Specifically, in the lignocellulose, cellulose, which is a linear polymer, forms a crystal structure by intramolecular and intermolecular hydrogen bonds and forms a strong microfibril, which is intertwined with hemicellulose such as xylan or glucomannan; further, lignin, which is an irregular aromatic polymer, fills voids in a matrix of such a polysaccharide, thereby forming a strong composite.

In the production method according to an embodiment of the present disclosure, lignin in lignocellulose is oxidized and decomposed by reacting the woody biomass in a solvent with an oxidant and an acid catalyst (delignification treatment). As a result, the strong higher-order structure of lignocellulose is dissociated, and the decomposition product or oxide of lignin is dissolved in the solvent to yield a liquid product containing a polysaccharide such as cellulose or hemicellulose as a solid content. In other words, the liquid product is a suspension or dispersion of a solid content containing a polysaccharide as a main component.

The solvent used in the production method according to an embodiment of the present disclosure may be water and/or an organic solvent. A solvent that dissolves lignin or a lignin decomposition product but does not dissolve a polysaccharide is preferably used. Examples of the solvent include alcohol solvents such as methanol and ethanol, ether solvents such as diethyl ether and diisopropyl ether, ester solvents such as ethyl acetate, hydrocarbon solvents such as pentane and hexane, aromatic hydrocarbon solvents such as benzene and toluene, halogen-containing solvents such as chloroform and dichloroethylene, amide solvents such as N,N-dimethylformamide, and nitrile solvents such as acetonitrile. Two or more types of these solvents may be used in combination as a mixed solvent. The solvent is preferably a hydrocarbon solvent and is more preferably toluene.

The amount of the solvent to be used is not particularly limited as long as the polysaccharide nanosheet according to an embodiment of the present disclosure is produced. The amount of the solvent can be appropriately adjusted in consideration of the type of the woody biomass as a raw material, the type of the solvent, and the like. From the viewpoint of improving the reactivity in the delignification treatment, for example, the amount of the solvent may be from 0.1 to 10 ml, from 0.2 to 1.0 ml, or from 0.3 to 0.6 ml relative to 100 mg of the woody biomass.

A peroxide and/or a peracid can be suitably used as the oxidant. The use of a peroxide and/or a peracid as the oxidant makes it possible to efficiently decompose and oxidize lignin in lignocellulose.

Examples of the peroxide include hydroperoxides such as hydrogen peroxide and t-butyl hydroperoxide, and peroxides such as di-t-butyl peroxide and benzoyl peroxide. The peracid may be an organic peracid such as performic acid, peracetic acid, trifluoroperacetic acid, or perbenzoic acid, or an inorganic peracid such as permanganic acid. Two or more types of these may be used in combination as the oxidant. From the viewpoint of availability, hydrogen peroxide is preferred.

The amount of the oxidant to be used can be adjusted to fall within an appropriate range as long as the effects of the present disclosure are achieved. From the viewpoint of improving the reactivity in the delignification treatment, for example, the amount of the oxidant may be from 0.1 to 5.0 mmol, from 0.2 to 3.0 mmol, or from 0.5 to 1.5 mmol relative to 100 mg of the woody biomass. When the oxidant is used in an amount exceeding the above range, the oriented structure derived from the raw material plant tissue may disappear depending on the reaction conditions, and the yield of the polysaccharide nanosheet may decrease. Furthermore, another problem may arise in that a long time is required for production of the polysaccharide nanosheet.

The acid catalyst promotes oxidation and degradation reactions of lignin. The acid catalyst in the present disclosure may be an inorganic acid such as sulfuric acid, hydrochloric acid, nitric acid, or phosphoric acid, an organic acid such as carboxylic acid, sulfonic acid, phosphonic acid, or phosphinic acid, or a mixture thereof. From the viewpoint that the polysaccharide nanosheet according to an embodiment of the present disclosure is easily produced, one type or two or more types selected from dodecylbenzenesulfonic acid, sulfuric acid, and p-toluenesulfonic acid are preferred, and dodecylbenzenesulfonic acid is more preferred.

From the viewpoint that the polysaccharide nanosheet according to an embodiment of the present disclosure is easily produced, the octanol/water partition coefficient of the acid catalyst may be 0 or more, -1 or more, or 1 or more. Examples of such an acid catalyst include dodecylbenzenesulfonic acid (1.96) and p-toluenesulfonic acid (-0.62). The numerical value in parentheses is an octanol/water partition coefficient.

The amount of the acid catalyst to be used can be adjusted to fall within an appropriate range as long as the effects of the present disclosure are achieved. From the viewpoint of promoting the decomposition reaction of lignin, for example, the amount of the acid catalyst may be from 0.5 to 50 µmol, from 1 to 30 µmol, or from 2 to 10 µmol relative to 100 mg of the woody biomass. When the acid catalyst is used in an amount exceeding the above range, the oriented structure derived from the raw material plant tissue may disappear depending on the reaction conditions.

From the viewpoint of promotion of the lignin decomposition reaction and suppression of disappearance of the oriented structure, the molar ratio (A/B) of the amount (A) of the oxidant to be used to the amount (B) of the acid catalyst to be used may be from 10 to 200 or from 20 to 50. When the ratio exceeds the above range, the oriented structure derived from the raw material plant tissue may disappear depending on the reaction conditions, and the yield of the polysaccharide nanosheet may decrease. Furthermore, depending on the molar ratio (A/B), the reaction time may be prolonged.

The reaction conditions for the delignification treatment are not particularly limited and may be appropriately selected depending on the type and amount of the woody biomass, and the types and amounts of the solvent, oxidant, and acid catalyst to be used. For example, the delignification treatment may be performed in any reaction atmosphere such as an air atmosphere, a nitrogen atmosphere, or an argon atmosphere. The delignification treatment may be performed under normal pressure, reduced pressure, or increased pressure.

The reaction temperature of the delignification treatment may be 100°C or lower or may be 90°C or lower, and is preferably 80°C or lower. From the viewpoint of reaction efficiency, the reaction temperature is preferably 50°C or higher. The reaction time can be appropriately adjusted depending on the reaction temperature. When the reaction temperature is high, the oriented structure derived from the raw material plant tissue may disappear, and the yield of the polysaccharide nanosheet may decrease. Therefore, the reaction is preferably performed at a temperature as low as possible.

As described above, in this production method, the delignification treatment oxidizes and decomposes lignin contained in the woody biomass, and the decomposition product is dissolved in the solvent, whereby a liquid product in which a solid content containing a polysaccharide as a main component is dispersed or suspended is produced. The solid content contains a polysaccharide nanosheet having a thickness of 500 µm or less and an aspect ratio of 10 or more, the aspect ratio being expressed as a ratio of a diameter of a maximum circle that can be drawn on a plane perpendicular to the thickness direction to the thickness. When the polysaccharide nanosheet according to an embodiment of the present disclosure is used in slurry form, the liquid product can be used as is. In this case, the oxidant and the acid catalyst in the liquid product may be deactivated if necessary, and the solvent may be replaced depending on the application. The liquid product also contains lignin or the like in addition to the polysaccharide nanosheet. Lignin or the like can be effectively utilized by using the liquid product.

The production method according to an embodiment of the present disclosure may further include solid-liquid separation after the delignification treatment for separation of a solid content from the liquid product. A method of solid-liquid separation of the liquid product is not particularly limited, and a known separation method such as filtration or centrifugation can be employed. For example, a filtered product containing a polysaccharide nanosheet may be obtained by filtering the liquid product produced by the delignification treatment. If necessary, the filtered product may be dried. The filtered product obtained by filtering the liquid product may be washed and then dried. The solvent described above in the delignification treatment can be used as a washing solvent. When the liquid product is centrifuged, the nanosheet according to an embodiment of the present disclosure is not easily precipitated, and thus may be dispersed in a supernatant. For example, when the supernatant after centrifugation is freeze-dried, a relatively large fibrous substance or sheet-shaped product can be removed to produce a high-quality polysaccharide nanosheet. In other words, the production method according to an embodiment of the present disclosure may further include separating the polysaccharide nanosheet from the supernatant obtained by centrifuging the liquid product.

The liquid product produced by the delignification treatment may contain a layered material composed of a fiber bundle or a fibrous substance having a width or diameter on the order of microns, which is derived from a tissue structure such as cells or fibers constituting the woody biomass and is formed by bonding a plurality of fibrous substances containing a polysaccharide as a main component. In this production method, if necessary, the polysaccharide nanosheet according to an embodiment of the present disclosure may be produced by peeling a nanometer-order layer composed of a fibrous substance from the layered material composed of a fiber bundle or a fibrous substance.

In other words, in the production method according to an embodiment of the present disclosure, the delignification treatment may be performed so that the nanosheet is peeled off from the layered material composed of a fiber bundle or a fibrous substance. The treatment of peeling off the nanosheet from the layered material composed of a fiber bundle or a fibrous substance may be stirring treatment accompanied by micronization. In this production method, the stirring treatment may be performed during the delignification treatment, the liquid product after the delignification treatment may be subjected to the stirring treatment, or the stirring treatment may be performed during and after the delignification treatment. FIG. 4 illustrates a state where a polysaccharide nanosheet is peeled off from a layered material composed of a fiber bundle or a fibrous substance in this production method. As illustrated in the drawing, the treatment of peeling off the nanosheet in layers from the layered material composed of a fiber bundle or a fibrous substance is different from a so-called defibration treatment of subdividing a fiber bundle into fibers. The peeling treatment by stirring according to an embodiment of the present disclosure may be performed after re-dispersing, in water or an organic solvent, the filtered product obtained by optional solid-liquid separation (washing, if necessary) after the delignification treatment.

The method is not particularly limited as long as the nanosheet can be peeled from the fiber bundle. For example, a commercially available disperser or pulverizer can be appropriately used as an apparatus for the stirring treatment accompanied by micronization. A known apparatus such as a homogenizer, a colloid mill, or a cutter mill can be used. Specific examples of the apparatus include Phystocoron (a homogenizer available from Microtec Co., Ltd.) and ABS-V (an absolute mill available from Osaka Chemical Co., Ltd.). The homogenizer is preferred.

Examples of the method of separating the nanosheet from the liquid product after the treatment using a homogenizer or the like include centrifugation. The nanosheet peeled off by the stirring treatment accompanied by micronization is less likely to precipitate, and thus is easily dispersed in the supernatant. For example, when the supernatant after centrifugation is freeze-dried, a relatively large fibrous substance or sheet-shaped product can be removed to produce a high-quality polysaccharide nanosheet. In other words, the production method according to an embodiment of the present disclosure may further include separating the nanosheet from the supernatant obtained by centrifuging the liquid product after the stirring treatment accompanied by micronization.

From the viewpoint of improving the reactivity in the delignification treatment, wood powder obtained by pulverizing the woody biomass may be used as a raw material. Particles contained in the wood powder may have a particle size of from 0.10 mm to 3.0 mm, from 0.15 mm to 2.0 mm, from 0.20 mm to 1.0 mm, from 0.25 mm to 0.75 mm, from 0.30 mm to 0.55 mm, or from 0.35 mm to 0.50 mm. The particle size of the powder is measured by a sieve classification method using a JIS standard sieve.

The method of pulverizing the woody biomass may be, for example, compression pulverization, impact pulverization, or shear pulverization. The pulverization may be dry pulverization or wet pulverization. The dry pulverization is preferably used.

Examples of the pulverizer used in the pulverization of the woody biomass include a jaw crusher, a gyratory crusher, a crushing roll, a hammer mill, a roller mill, a cutter mill, a hammer crusher, and a Wiley mill.

### Applications

The polysaccharide nanosheet according to an embodiment of the present disclosure produced by using a woody biomass having a low environmental load as a raw material is a material having a high biomass concentration. The polysaccharide nanosheet maintains a fiber-oriented structure derived from a plant tissue, and thus has excellent mechanical properties. In addition, the polysaccharide nanosheet, which is a two-dimensional nanostructure, is highly anisotropic and has high barrier properties, and thus can be used as a highly functional sheet or film. Since the polysaccharide nanosheet is derived from a plant tissue and originally has a nanosheet shape, an extremely thin sheet can be prepared by artificially laminating the nanosheets. Since the polysaccharide nanosheet has a property of being hard to aggregate, it can be blended in a resin or an inorganic material as an additive for the purpose of improving strength, gas barrier properties, and the like. In addition, the polysaccharide nanosheet according to an embodiment of the present disclosure can also be blended in a coating material that is mainly composed of a resin, a solvent, an additive, and a pigment. When blended in such a coating material, the polysaccharide nanosheet, which is a two-dimensional nanostructure, can improve the performance (e.g., glossiness or smoothness) of the coating material. Also, the polysaccharide nanosheet according to an embodiment of the present disclosure can be used as an additive for a wall plastering material.

### Composition and Molded Article

A composition and a molded article containing the polysaccharide nanosheet according to an embodiment of the present disclosure can be produced by known techniques. For example, a sheet or a film may be produced by mixing a suspension containing the polysaccharide nanosheet according to an embodiment of the present disclosure with a solution in which a desired polymer is dissolved to prepare a casting solution, and casting the casting solution. Alternatively, a solid content obtained by distilling off or volatilizing a solvent from the casting solution may be used as a composition containing the polysaccharide nanosheet and the polymer, and the composition may be pulverized and extruded by an extruder to form a film. At the time of extrusion film formation, an additional polymer may be blended as necessary.

Alternatively, the polysaccharide nanosheet-containing supernatant after centrifugation, which is obtained in the production process for the polysaccharide nanosheet according to an embodiment of the present disclosure, may be dispersed in a solvent such as ethyl alcohol and then sprayed on desired resin pellets and dried to prepare resin pellets containing the polysaccharide nanosheet, and the resin pellets may be extruded by an extruder to form a film. The sheet or film formed by casting or extrusion film formation may be further rolled and stretched. The rolling may be cold rolling or rolling at a temperature equal to or higher than the glass transition temperature of the resin (polymer).

Alternatively, the polysaccharide nanosheet according to an embodiment of the present disclosure may be kneaded with, for example, a thermoplastic resin, followed by extrusion molding to prepare resin pellets containing the polysaccharide nanosheet. Such resin pellets can be subjected to injection molding depending on the melt viscosity thereof. In the case of injection molding, the melt flow rate of the resin to be blended with the polysaccharide nanosheet according to an embodiment of the present disclosure may be 10 or more, or 20 or more.

As described above, the polysaccharide nanosheet according to an embodiment of the present disclosure has, on its surface, a region in which a plurality of fibrous substances are oriented in a planar direction. However, in the composition and the molded article according to an embodiment of the present disclosure, the polysaccharide nanosheet itself is not necessarily oriented in a specific direction, unlike nanocellulose (cellulose nanofiber), which is a one-dimensional structure. That is, although a structure in which a plurality of fibrous substances are oriented is formed on the surface or in the interior of the polysaccharide nanosheet, the polysaccharide nanosheets in the molded article are not necessarily oriented in the same direction. For example, the composition or the molded article according to an embodiment of the present disclosure includes a case where the orientation direction of one polysaccharide nanosheet is different from the orientation direction of another polysaccharide nanosheet in the vicinity thereof.

A molded article containing the polysaccharide nanosheet, for example, a film can also be stretched in a uniaxial direction. When the film is stretched, the polysaccharide nanosheet itself is oriented in the planar direction of the film. Preferably, the planar direction of the polysaccharide nanosheet is oriented substantially parallel to the planar direction of the film. The polysaccharide nanosheet according to an embodiment of the present disclosure has a fiber structure oriented in a planar direction on the surface or in the interior of the polysaccharide nanosheet. In the film in which the polysaccharide nanosheet itself is oriented, the strength in the biaxial direction is improved. This is an effect that cannot be obtained by cellulose nanofiber, which is a one-dimensional structure. That is, when a stretching stress or the like is applied to a molded article containing the polysaccharide nanosheet according to an embodiment of the present disclosure, the planar direction of the polysaccharide nanosheet is oriented in the direction of stress application. From the viewpoint of achieving high strength, in the molded article, the planar direction of the polysaccharide nanosheet is preferably oriented substantially parallel to the planar direction of the molded article. Stretching, rolling, or similar means can be used for orienting the polysaccharide nanosheet in the molded article.

The polysaccharide nanosheet according to an embodiment of the present disclosure can be provided with excellent properties such as high strength and high barrier properties depending on its shape and oriented structure. The composition and the molded article according to an embodiment of the present disclosure, which contain the polysaccharide nanosheet having a fiber-oriented structure derived from a plant tissue, exhibit excellent properties such as high strength and high barrier properties.

From the viewpoint of improving the properties of the composition and the molded article, the degree of orientation of the fibrous substance in the polysaccharide nanosheet is preferably high, and the degree of in-plane orientation may be 1.3 or more, 1.4 or more, 1.5 or more, or 1.6 or more. The upper limit of the degree of orientation is not particularly limited, and may be, for example, 2.5 or less.

For example, in the case of a thin molded article such as a film, the polysaccharide nanosheet itself is oriented in a direction parallel to the surface of the molded article. As described above, a structure in which a plurality of fibrous substances are oriented in a planar direction is formed on the surface or in the interior of the polysaccharide nanosheet. Therefore, even in the case of a molded article having a small thickness, the strength against bending stress is improved due to the fiber-oriented structure of the polysaccharide nanosheet. Furthermore, the polysaccharide nanosheet according to an embodiment of the present disclosure maintains the cellulose I crystal structure in addition to the plant-derived fiber structure. Therefore, in the molded article containing the polysaccharide nanosheet, the permeability of various molecules is reduced. In the case of a thin molded article such as a film, the permeability of molecules in the thickness direction can be reduced, and high barrier properties can be achieved.

### Derivatization

If necessary, the polysaccharide nanosheet according to an embodiment of the present disclosure may be used after derivatization of the surface or the like of the polysaccharide nanosheet as long as the function derived from its structure is not inhibited. This derivatization can provide the polysaccharide nanosheet with higher functionality. In particular, since many polymers (thermoplastic polymers) used in a molded article are hydrophobic, it is effective to introduce a functional group having hydrophobicity to the surface of the polysaccharide nanosheet according to an embodiment of the present disclosure. That is, the surface treatment such as introduction of a hydrophobic functional group improves the dispersibility of the polysaccharide nanosheet in the molded article or the polymer composition.

### Examples

Hereinafter, the present invention will be specifically described by way examples, but the technical scope of the present invention is not limited by these examples. Hereinafter, unless otherwise specified, all experiments were performed in a room (temperature: 25°C ± 5°C, humidity: 50% RH).

### Example 1

To an eggplant flask (volume 200 ml) equipped with a stirrer were added 10 g of 1 mm path cedar wood core powder ground using a Wiley mill, 2.6 mmol of dodecylbenzenesulfonic acid (available from Tokyo Chemical Industry Co., Ltd.) as a catalyst, 10 ml of 30% hydrogen peroxide solution (available from FUJIFILM Wako Pure Chemical Corporation), and 50 ml of toluene (available from Nacalai Tesque, Inc.) as a solvent, and the mixture was stirred at 60°C for 24 hours to allow a reaction to proceed. The eggplant flask was left to cool, and then methanol was added to the eggplant flask, followed by shaking. Thereafter, filtration was performed using a filter paper having a pore diameter of 5 µm. The filtered product on the filter paper was washed with water, 0.15% aqueous sodium hydrogen carbonate solution, and water in this order.

A part of the resultant filtered product in a water-wet state was collected and dried for 18 hours using a freeze dryer, and the solid content concentration of the filtered product was calculated based on a weight change before and after the drying. An amount of the filtered product containing 0.3 g of a solid content, the amount of which was calculated from the solid content concentration, was collected, and water was added thereto, to prepare 100 g of a suspension. The suspension was treated with Physcotron NS-50 available from Microtec Co., Ltd. at a scale of 45 for 60 minutes to produce a polysaccharide nanosheet of Example 1. FIG. 4 illustrates an image of the filtered product contained in the suspension during this treatment, as obtained by observation with a scanning electron microscope (SEM). As confirmed from FIG. 4, the nanosheet was peeled off from the fiber bundle by the stirring treatment accompanied by micronization.

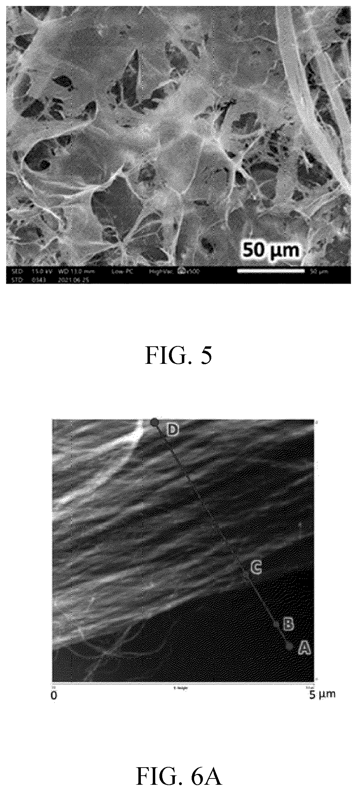

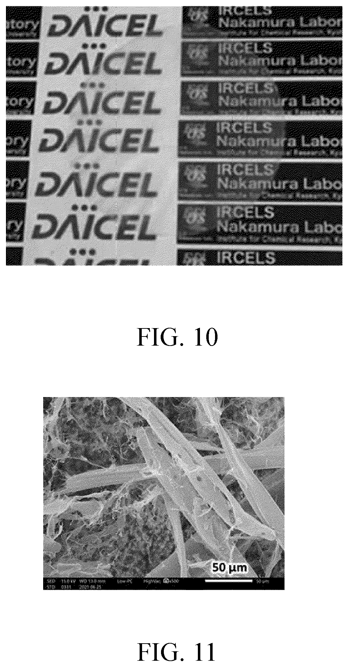

FIG. 5 illustrates an image of the nanosheet of Example 1 after the micronization treatment, as obtained by observation with a scanning electron microscope (SEM). As confirmed from FIG. 5, the nanosheet of Example 1 was a sheet-shaped product. FIG. 11 illustrates an SEM image of a freeze-dried sample before the micronization treatment. As illustrated in this figure, in Example 1, the number of sheet-shaped products was small before the micronization treatment, and the number of sheet-shaped products (nanosheets) was increased by the micronization treatment.

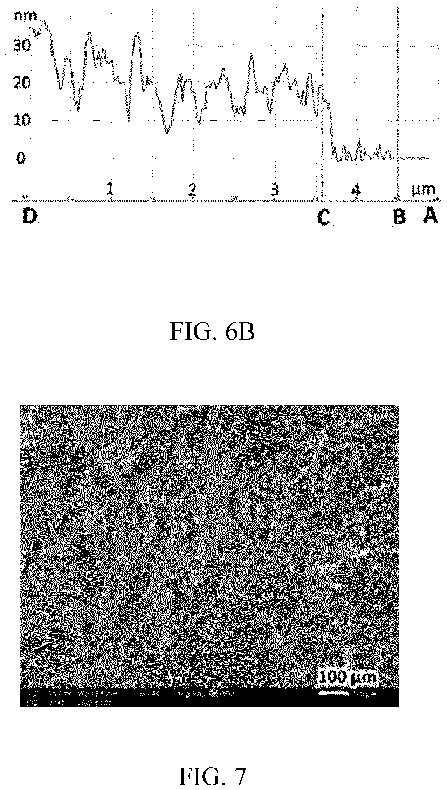

FIG. 6A is an image of the nanosheet of Example 1, as obtained by observation with an atomic force microscope (AFM). In FIG. 6A, A to D are symbols indicating points on the sheet, and symbol A denotes a point on a substrate (mica) where no sheet is present. FIG. 6B illustrates a height profile at points A to D in FIG. 6A. As confirmed from FIG. 6A, the sheet-shaped product of Example 1 had a structure in which fine fibrous substances were highly oriented. As confirmed from FIG. 6B, the sheet-shaped product of Example 1 had a nano-level thickness.

Table 1 below shows the polysaccharide content, constituent sugar composition, lignin content, molecular weight, and molecular weight distribution in Example 1 as measured by the methods described above.

**[Table 1]**

| (Table 1) Evaluation Results in Example 1 | | |
|---|---|---|
| Polysaccharide content | wt% | 95.9 |
| Glucose content | wt% | 68.4 |
| Mannose content | wt% | 7.8 |
| Xylose content | wt% | 5 |
| Lignin | wt% | 4.1 |
| Mw | - | 859,600 |
| Mn | - | 39,700 |
| Mw/Mn | - | 21.7 |

### Example 2

A slurry prepared in the same manner as in Example 1 was centrifuged at a centrifugal force (rcf) of 600 (× g) using a small centrifuge (LMS, MCF-1350), and the supernatant was collected. The supernatant was freeze-dried to produce a polysaccharide nanosheet of Example 2. FIG. 7 illustrates an image of the polysaccharide nanosheet of Example 2 as obtained by observation with a scanning electron microscope (SEM). As confirmed from FIG. 7, the polysaccharide nanosheet of Example 2 was an approximately homogeneous nanosheet containing substantially no large fibrous substance.

### Comparative Example 1

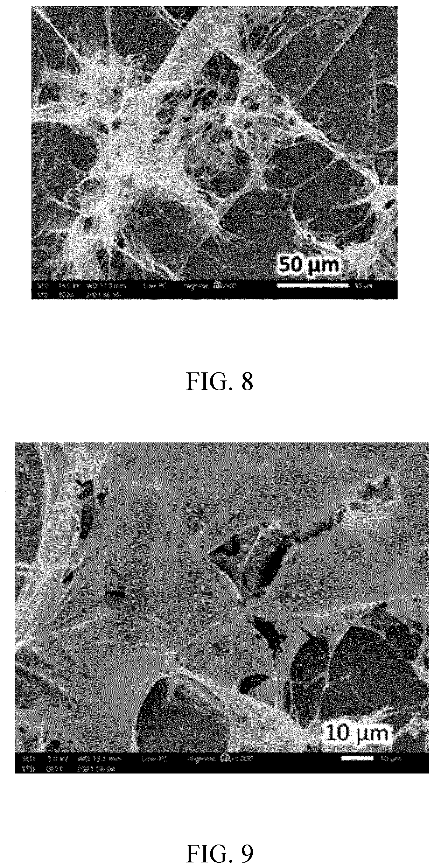

A product of Comparative Example 1 was produced by treatment in the same manner as in Example 1 except that 1.00 g of 1H-imidazolium, 1-methyl-3-(3-sulfopropyl)-, 4-methylbenzenesulfonate (available from Angene Co., Ltd.) was used as a catalyst instead of dodecylbenzenesulfonic acid. FIG. 8 illustrates an image of the product of Comparative Example 1 as obtained by observation with a scanning electron microscope (SEM). As confirmed from FIG. 8, the product of Comparative Example 1 contained a large amount of fine fibrous substances, was not a sheet-shaped product unlike the case of Example 1 or 2, and did not have an oriented structure.

### Referential Example

In Referential Example, commercially available microfibrillated cellulose (MFC, available from Daicel Corporation) was provided.

### Degree of Orientation, Thickness, and Aspect Ratio

Each of the samples collected in Examples 1 and 2, Comparative Example 1, and Reference Example was added to water to prepare an about 0.01 mass% dispersion. The dispersion was added dropwise onto a mica plate and naturally dried, and then observed with a laser microscope equipped with a white light interferometer (available from KEYENCE CORPORATION). The obtained image was analyzed by the above-described methods, to determine the degree of orientation, thickness, and aspect ratio. The obtained results are shown in Table 2 below. The degree of orientation or the thickness in each of Example 2, Comparative Example 1, and Reference Example is shown as a numerical range determined from two to four sheets.

### Crystal Structure

In Example 1, X-ray diffraction was measured for the freeze-dried sample before the micronization treatment with Physcotron and the freeze-dried sample after the micronization treatment by using MAXima_X XRD-7000 available from Shimadzu Corporation with Cu α radiation at 40 kV in a range of from 5 to 40°. As confirmed from the measurement results, there was no large difference between the diffraction patterns before and after the micronization treatment, and in both cases, there were observed a diffraction peak in the vicinity of 2θ = 22.5°, which is characteristic of cellulose I crystal, and diffraction peaks in the vicinity of 2θ = 16.7° and 2θ = 14.8° by peak separation. The crystallinity was determined by the Segal method to be 79% before the micronization treatment and 77% after the micronization treatment. These results suggested that the crystallinities before and after the micronization treatment were at an equivalent level, and that the cellulose I crystal structure was retained in the polysaccharide nanosheet after the micronization treatment.

### [Table 2]

**(Table 2)**

| | Degree of orientation | Thickness (nm) | Aspect ratio |
|---|---|---|---|
| Example 1 | 1.73 | 20 | 100 |
| Example 2 | 1.40 to 1.66 | 31 to 42 | 281 to 765 |
| Comparative Example 1 | 1.25 to 1.29 | - | - |
| Reference Example | 1.23 to 1.27 | - | - |

### Example 3

A polysaccharide nanosheet of Example 3 was produced in the same manner as in Example 1 except that 0.50 g of p-toluenesulfonic acid monohydrate (available from FUJIFILM Wako Pure Chemical Corporation) was used as a catalyst instead of dodecylbenzenesulfonic acid, and the treatment time with Physcotron NS-50 was 10 minutes. FIG. 9 illustrates an image of the polysaccharide nanosheet of Example 3 as obtained by observation with a scanning electron microscope (SEM). As confirmed from FIG. 9, the polysaccharide nanosheet of Example 3 was a sheet-shaped product.

### Comparative Example 2

A product of Comparative Example 2 was produced by treatment in the same manner as in Example 3 except that the treatment time with Physcotron NS-50 was 60 minutes. As confirmed by observation with a scanning electron microscope (SEM), the product of Comparative Example 2 was a fine fiber having a width on the order of nanometers and was not a sheet-shaped product. From the comparison with Comparative Example 2, it is presumed that, in Example 3 wherein the treatment was performed for 10 minutes using Phystocoron NS-50, a nanosheet in which the fibrous substance derived from the wood structure was oriented in a planar direction was produced as in Example 1.

### Example 4

The suspension containing a polysaccharide nanosheet after treatment with Phystocoron NM-50 in Example 1 was diluted two-fold with water. Subsequently, the resultant diluted solution was subjected to suction filtration using a membrane filter having a pore size of 0.45 µm. The filtered product on the filter was collected, pressed at 5 MPa, and dried at 105°C for 10 minutes to produce a sheet (thickness: 27 µm) of Example 4. FIG. 10 illustrates an appearance photograph of the resulting sheet. As illustrated in FIG. 10, the sheet was translucent. In addition, it was confirmed that the sheet of Example 4 had a higher tensile strength than a commercially available high-quality paper such as chartula.

### Example 5

1 part by mass of the polysaccharide nanosheet of Example 2 is dispersed in 100 parts by mass of acetone. A magnetic stirrer is used for the dispersion. 9 parts by mass of cellulose acetate (trade name "L-30" available from Daicel Corporation; acetylation degree: 55%, 6% viscosity: 70) is gradually added to the resultant dispersion, to prepare a substantially transparent casting solution. The casting solution is cast on a Teflon sheet, and then the solution-cast Teflon sheet is left to stand in an oven at 80°C for drying to form a film (thickness: about 80 µm) of Example 5 composed of a composition containing a polysaccharide nanosheet and cellulose acetate.

### Example 6

The film of Example 5 is rolled at a nip pressure of 20 kgf/cm² using a nip roll having a width of 300 mm composed of a metallic roll and a rubber roll to form a film of Example 6 (thickness: about 40 µm).

As shown in Tables 1 and 2, in Examples 1 to 3, there was produced a nanosheet containing a polysaccharide as a main component in which a fibrous substance was highly oriented unlike typical nanosheets. In addition, as shown in Examples 4 to 6, it was confirmed that a molded article containing the polysaccharide nanosheet was produced. The polysaccharide nanosheet and the molded article containing the polysaccharide nanosheet are expected to have mechanical properties based on an oriented structure derived from a plant tissue as a raw material, in addition to biodegradability due to the use of a polysaccharide as a material, and high anisotropy and barrier properties due to a two-dimensional nanostructure.

### Industrial Applicability

The polysaccharide nanosheet according to the present disclosure can be produced by using, as a raw material, any biomass containing a polysaccharide.

## Claims

1. A polysaccharide nanosheet comprising a polysaccharide as a main component,
the polysaccharide nanosheet being formed to contain a plurality of fibrous substances, wherein
the fibrous substances are oriented in a planar direction in a randomly selected region on a surface of the polysaccharide nanosheet.

2. The polysaccharide nanosheet according to claim 1, wherein the polysaccharide nanosheet has a region in which a degree of orientation of the fibrous substances is 1.3 or more, and the degree of orientation is measured by a method described below:
a method of measuring the degree of orientation: a 1 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

3. The polysaccharide nanosheet according to claim 1, wherein the polysaccharide nanosheet has a region in which a degree of orientation of the fibrous substances is 1.3 or more, and the degree of orientation is measured by a method described below:
a method of measuring the degree of orientation: a 5 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

4. The polysaccharide nanosheet according to claim 1, wherein the polysaccharide nanosheet has a region in which a degree of orientation of the fibrous substances is 1.3 or more, and the degree of orientation is measured by a method described below:
a method of measuring the degree of orientation: a 23.7 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

5. The polysaccharide nanosheet according to claim 1, wherein an average value obtained by measuring degrees of orientation of the fibrous substances in a plurality of randomly selected regions on a surface of the polysaccharide nanosheet by a measurement method described below is 1.3 or more:
a method of measuring the degree of orientation: a 1 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

6. The polysaccharide nanosheet according to claim 1, wherein when degrees of orientation of the fibrous substances are measured in a plurality of randomly selected regions on a surface of the polysaccharide nanosheet by a measurement method described below, a degree of orientation is 1.3 or more in 40% or more of a total number of measured regions:
a method of measuring the degree of orientation: a 1 µm square region in a microscopic image of a surface of the polysaccharide nanosheet is binarized and then subjected to Fourier transformation to obtain a power spectrum image; an approximate ellipse is obtained from the power spectrum image by a least-squares method; and a ratio a/b of a major axis a to a minor axis b of the approximate ellipse is calculated and defined as the degree of orientation.

7. The polysaccharide nanosheet according to any one of claims 1 to 6, wherein the polysaccharide nanosheet has a thickness of 500 nm or less; and
an aspect ratio of 10 or more, the aspect ratio being represented as a ratio of a diameter of a maximum inscribed circle obtained by projection on a plane perpendicular to a thickness direction to the thickness of the polysaccharide nanosheet.

8. The polysaccharide nanosheet according to any one of claims 1 to 7, wherein the polysaccharide is a polysaccharide derived from a woody biomass.

9. The polysaccharide nanosheet according to any one of claims 1 to 8, wherein the polysaccharide has a weight average molecular weight of 150000 or more and 1500000 or less.

10. The polysaccharide nanosheet according to any one of claims 1 to 9, wherein the polysaccharide contains cellulose.

11. A composition comprising the polysaccharide nanosheet described in any one of claims 1 to 10.

12. A molded article comprising the polysaccharide nanosheet described in any one of claims 1 to 10.

13. A method for producing a polysaccharide nanosheet, the method comprising:
subjecting a woody biomass as a raw material to a delignification treatment with an oxidant and an acid catalyst in a solvent, to prepare a liquid product containing a polysaccharide nanosheet,
the polysaccharide nanosheet having a thickness of 500 nm or less and an aspect ratio of 10 or more, the aspect ratio being represented as a ratio of a diameter of a maximum inscribed circle obtained by projection on a plane perpendicular to a thickness direction to the thickness of the polysaccharide nanosheet.

14. The method for producing a polysaccharide nanosheet according to claim 13, wherein the woody biomass is a woody biomass having a secondary wall.

15. The method for producing a polysaccharide nanosheet according to claim 13 or 14, further comprising separating a solid content from the liquid product.

16. The method for producing a polysaccharide nanosheet according to any one of claims 13 to 15, further comprising performing a stirring treatment during the delignification treatment.

17. The method for producing a polysaccharide nanosheet according to any one of claims 13 to 16, further comprising performing a stirring treatment after the delignification treatment.

18. The method for producing a polysaccharide nanosheet according to any one of claims 15 to 17, further comprising separating the polysaccharide nanosheet from a supernatant obtained by separation of the solid content through centrifugation of the liquid product.
